# EUROPÄISCHE PATENTSCHRIFT

(11) **EP 3 766 216 B1**
(45) Veröffentlichungstag und Bekanntmachung des Hinweises auf die Patenterteilung: **28.01.2026**
(21) Anmeldenummer: 19709444.4
(22) Anmeldetag: 05.03.2019
(51) Int. Cl.: H04L 12/413, H04L 25/02, H04L 25/03

(54) **SENDE-/EMPFANGSEINRICHTUNG FÜR EIN BUSSYSTEM UND BETRIEBSVERFAHREN HIERFÜR**
TRANSMISSION/RECEPTION DEVICE FOR A BUS SYSTEM, AND METHOD OF OPERATION THEREFOR
DISPOSITIF D'ÉMISSION/RÉCEPTION POUR UN SYSTÈME DE BUS ET PROCÉDÉ POUR LE FAIRE FONCTIONNER

(30) Priorität: 12.03.2018 DE 102018203708
(43) Veröffentlichungstag der Anmeldung: 20.01.2021
(73) Patentinhaber: Robert Bosch GmbH, 70442 Stuttgart (DE)
(72) Erfinder: WALKER, Steffen, 72770 Reutlingen (DE); MUTTER, Arthur, 73765 Neuhausen (DE)
(86) Internationale Anmeldenummer: PCT/EP2019/055365
(87) Internationale Veröffentlichungsnummer: WO 2019/174960

(56) Entgegenhaltungen:
- US-A1- 2011 285 424

## Beschreibung

### Stand der Technik

Die Erfindung betrifft eine Sende-/Empfangseinrichtung für ein Bussystem, wobei die Sende-/Empfangseinrichtung einen ersten Busanschluss zur Verbindung mit einer ersten Signalleitung des Bussystems, einen zweiten Busanschluss zur Verbindung mit einer zweiten Signalleitung des Bussystems und eine Empfangseinheit zum Empfangen eines Busempfangssignals von dem ersten und zweiten Busanschluss aufweist.

Die Erfindung betrifft ferner ein Verfahren zum Betreiben einer derartigen Sende-/Empfangseinrichtung.

Aus der DE 102015222334A1 sind eine Einrichtung und ein Verfahren zum selektiven Ausblenden von Busschwingungen bei dem Datenempfang über ein Bussystem bekannt. Die bekannte Einrichtung sieht ein Maskierungselement zum Maskieren von Schwingungen des Bussignals vor. Das Maskierungselement ist vergleichsweise aufwendig. US 2011/285424 A1 beschreibt eine differentielle Kommunikationseinrichtung.

### Offenbarung der Erfindung

Es ist daher Aufgabe der vorliegenden Erfindung, eine Sende-/Empfangseinrichtung der eingangs genannten Art und ein Betriebsverfahren hierfür dahingehend zu bessern, dass die vorstehend genannten Nachteile des Stands der Technik vermindert oder vermieden werden.

Vorgeschlagen ist eine Sende-/Empfangseinrichtung für ein Bussystem gemäß Anspruch 1. Dies ermöglicht vorteilhaft eine Verminderung von unerwünschten Busschwingungen ohne das Erfordernis einer vergleichsweise komplexen Maskiereinheit, wie sie aus dem Stand der Technik bekannt ist. Durch die Verbindung der Busanschlüsse mittels des vorgebbaren elektrischen Widerstandes für die vorgebbare erste Zeitdauer können gegebenenfalls auftretende Busschwingungen vorteilhaft vermindert werden, weil sich in der ersten Zeitdauer eine größere Dämpfung durch den zugeschalteten Widerstand ergibt. Weiter vorteilhaft ist eine flexible Festlegung der ersten Zeitdauer ermöglicht, sodass der Widerstand optimal lang bzw. kurz aktivierbar ist, beispielsweise, bis eine hinreichende Dämpfung von unerwünschten Busschwingungen erfolgt ist, nicht jedoch länger.

Die Empfangseinheit weist einen Empfangskomparator auf, der dazu ausgebildet ist, in Abhängigkeit des Busempfangssignals ein Busdifferenzsignal zu bilden, wobei die wenigstens eine Betriebsgröße der Empfangseinheit das Busdifferenzsignal oder ein daraus abgeleitetes Signal ist. Dadurch kann die vorgebbare erste Zeitdauer besonders präzise ermittelt werden.

Der Empfangskomparator weist mehrere Empfangsschwellen, insbesondere für das Busdifferenzsignal, auf, wodurch besonders effizient ermittelt werden kann, für wie lange der Widerstand an die Busleitungen zu schalten ist (vorgebbare erste Zeitdauer).

Eine erste Empfangsschwelle liegt bei etwa 0,7 Volt, wobei eine zweite Empfangsschwelle bei einem Wert kleiner etwa 0 Volt liegt, und wobei insbesondere eine dritte Empfangsschwelle zwischen etwa 0 Volt und der ersten Empfangsschwelle liegt. Untersuchungen der Anmelderin zufolge ist hierdurch die erste Zeitdauer besonders einfach und präzise ermittelbar.

Die Sende-/Empfangseinrichtung ist dazu ausgebildet, den ersten und zweiten Busanschluss für die vorgebbare erste Zeitdauer über den vorgebbaren elektrischen Widerstand miteinander zu verbinden, wenn wenigstens eine der vorliegenden Bedingungen vorliegt: a) eine steigende Flanke eines Sendeeingangssignals für eine Sendeeinheit der Sende-/Empfangseinrichtung, b) ein Zustandsübergang der Sendeeinheit von einem den ersten und zweiten Busanschluss treibenden Betriebszustand in einen den ersten und zweiten Busanschluss nicht treibenden Betriebszustand, c) eine fallende Flanke eines mittels der Empfangseinheit aus dem Busempfangssignal abgeleiteten Differenzsignals.

Bei weiteren Ausführungsformen weist der vorgebbare elektrische Widerstand einen Wert zwischen etwa 40 Ohm und etwa 200 Ohm auf, bevorzugt zwischen etwa 80 Ohm und etwa 160 Ohm, weiter bevorzugt zwischen 100 Ohm und etwa 140 Ohm, ganz besonders bevorzugt etwa 120 Ohm.

Weitere Aspekte der Ausführungsformen sind angegeben durch eine Teilnehmerstation für ein Bussystem mit wenigstens einer Sende-/Empfangseinrichtung gemäß den Ausführungsformen.

Weitere Aspekte der Ausführungsformen sind angegeben durch ein Bussystem mit einer Busleitung, die wenigstens eine erste Signalleitung und wenigstens eine zweite Signalleitung aufweist, und mit mindestens zwei Teilnehmerstationen, wobei wenigstens eine der mindestens zwei Teilnehmerstationen wenigstens eine Sende-/Empfangseinrichtung gemäß den Ausführungsformen aufweist.

Weitere Aspekte der Ausführungsformen sind angegeben durch ein Verfahren zum Betreiben einer Sende-/Empfangseinrichtung für ein Bussystem nach Anspruch 7. Vorteilhafte Weiterbildungen sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Schutzansprüchen oder deren Rückbeziehung sowie unabhängig von ihrer Formulierung bzw. Darstellung in der Beschreibung bzw. in der Zeichnung.

In der Zeichnung zeigt:
- Figur 1: schematisch ein vereinfachtes Blockschaltbild eines Bussystems gemäß einer Ausführungsform,
- Figur 2: schematisch ein vereinfachtes Blockschaltbild eines Bussystems gemäß einer weiteren Ausführungsform,
- Figur 3: schematisch ein Blockdiagramm einer Sende-/Empfangseinrichtung gemäß einer Ausführungsform,
- Figur 4: schematisch ein Blockdiagramm einer Widerstandseinrichtung gemäß einer Ausführungsform,
- Figur 5: schematisch ein Blockdiagramm einer Sende-/Empfangseinrichtung gemäß einer weiteren Ausführungsform,
- Figur 6: ein vereinfachtes Flussdiagram eines Verfahrens gemäß einer Ausführungsform, und
- Figur 7: schematisch einen zeitlichen Verlauf einer Betriebsgröße gemäß einer Ausführungsform.

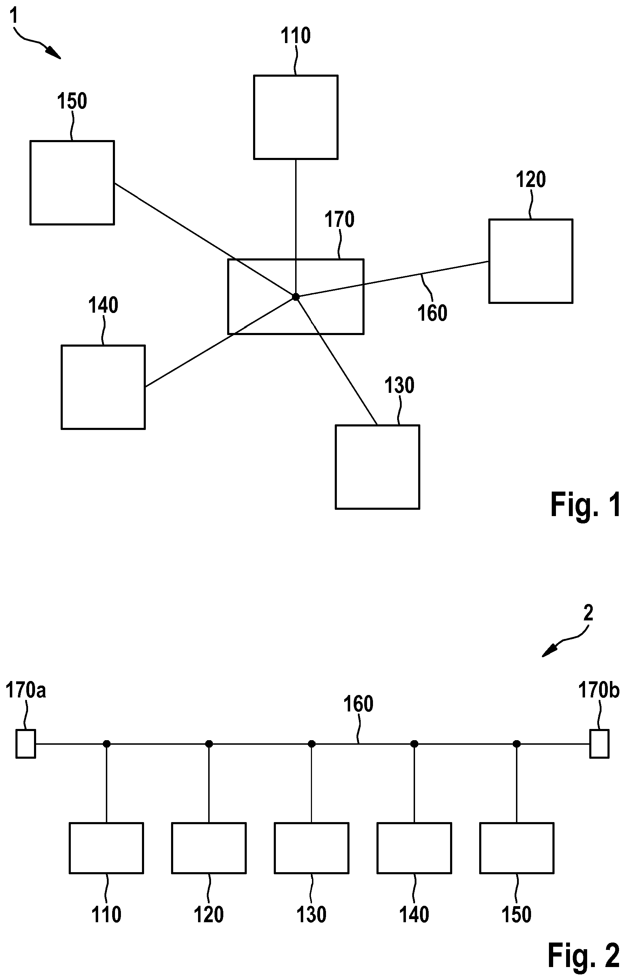

Figur 1 zeigt schematisch ein vereinfachtes Blockschaltbild eines Bussystems 1 gemäß einer Ausführungsform, das in einem Fahrzeug, insbesondere einem Kraftfahrzeug, einem Flugzeug, usw., oder in einem Industrieroboter usw. Verwendung finden kann. In Fig. 1 hat das Bussystem 1 eine erste Teilnehmerstation 110, eine zweite Teilnehmerstation 120, eine dritte Teilnehmerstation 130, eine vierte Teilnehmerstation 140, eine fünfte Teilnehmerstation 150, eine Busleitung 160 und einen Abschlusswiderstand 170, wobei die Teilnehmerstationen 110 bis 150 in einer sternförmigen Topologie angeordnet sind. Das Bussystem 1 kann beispielsweise ein CAN-Bussystem oder ein CAN-FD-Bussystem usw., sein. Ganz allgemein ist das Bussystem 1 bei dem vorliegenden Ausführungsbeispiel für eine Kommunikation ausgestaltet, bei welcher zumindest zeitweise ein exklusiver, kollisionsfreier Zugriff einer der Teilnehmerstationen 110 bis 150 auf die Busleitung 160 gewährleistet ist. Die erste Teilnehmerstation 110 kann beispielsweise ein Steuergerät eines Kraftfahrzeugs sein. Die zweite, vierte und fünfte Teilnehmerstation 120, 140, 150 kann beispielsweise jeweils ein Sensor des Kraftfahrzeugs sein. Die dritte Teilnehmerstation 130 kann beispielsweise eine Anzeigeeinrichtung eines Kraftfahrzeugs sein.

Figur 2 zeigt ein Bussystem 2 gemäß einem weiteren Ausführungsbeispiel. Im Unterschied zum Bussystem 1 gemäß dem ersten Ausführungsbeispiel weist das Bussystem 2 gemäß dem zweiten Ausführungsbeispiel eine lineare Bustopologie mit zwei Abschlusswiderständen 170a, 170b an jeweiligen Enden der Busleitung 160 auf. Die Teilnehmerstationen 110 bis 150 können bei dem Bussystem 2 gemäß Fig. 2 auf die gleiche Weise aufgebaut sein wie bei Fig. 1.

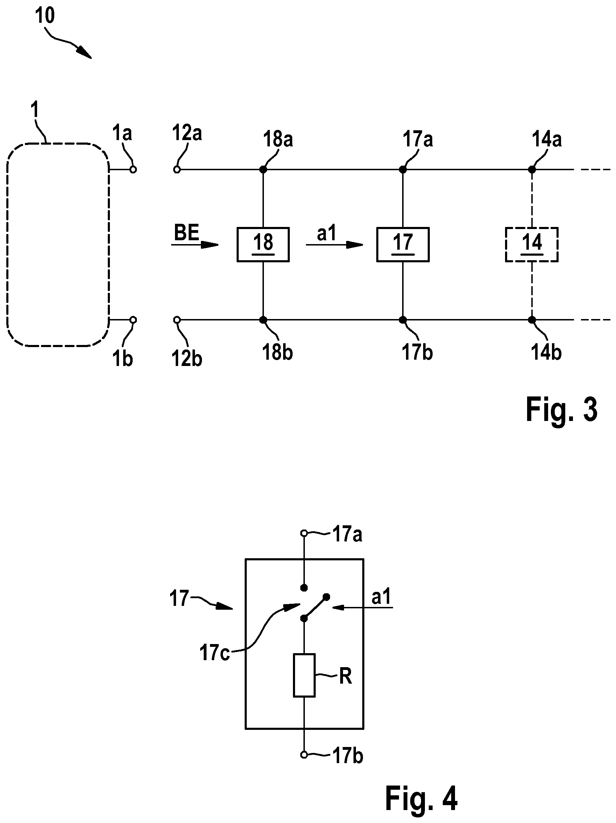

Figur 3 zeigt ein schematisches Blockdiagramm einer Sende-/Empfangseinrichtung 10 für ein Bussystem gemäß einer Ausführungsform. Beispielsweise kann die nachstehend unter Bezugnahme auf Figur 3 beschriebene Sende-/Empfangseinrichtung 10 in wenigstens einer Teilnehmerstation 110, .., 150 der vorstehend unter Bezugnahme auf die Figuren 1, 2 beschriebenen Bussysteme 1, 2 verwendet werden.

Die Sende-/Empfangseinrichtung 10 weist einen ersten Busanschluss 12a zur Verbindung mit einer ersten Signalleitung 1a des in Fig. 3 schematisch angedeuteten Bussystems 1 auf, und einen zweiten Busanschluss 12b zur Verbindung mit einer zweiten Signalleitung 1b des Bussystems 1. Beispielsweise weist die Busleitung 160 (Fig. 1) also die beiden Signalleitungen 1a, 1b auf.

Die Sende-/Empfangseinrichtung 10 weist ferner eine Empfangseinheit 18 zum Empfangen eines Busempfangssignals BE von dem ersten und zweiten Busanschluss 12a, 12b auf. Hierzu ist die Empfangseinheit 18 über ihre Anschlüsse 18a, 18b mit den Busanschlüssen 12a, 12b verbunden.

Erfindungsgemäß ist die Sende-/Empfangseinrichtung 10 dazu ausgebildet, den ersten und zweiten Busanschluss 12a, 12b für eine vorgebbare erste Zeitdauer über einen vorgebbaren elektrischen Widerstand miteinander zu verbinden.

Dies kann beispielsweise über die in Fig. 3 beispielhaft gezeigte Widerstandseinrichtung 17 erfolgen, die über ihre Anschlüsse 17a, 17b mit den Busanschlüssen 12a, 12b verbunden ist, und die z.B. den in Figur 4 abgebildeten Aufbau aufweist.

Die Widerstandseinrichtung 17 kann einen elektrischen Widerstand R aufweisen mit einem Wert zwischen etwa 40 Ohm und etwa 200 Ohm, bevorzugt zwischen etwa 80 Ohm und etwa 160 Ohm, weiter bevorzugt zwischen 100 Ohm und etwa 140 Ohm, ganz besonders bevorzugt mit etwa 120 Ohm, sowie einen hierzu in Serie angeordneten Schalter 17c, der durch ein Steuersignal a1, vorliegend beispielsweise durch die Empfangseinheit 18 bereitgestellt (Fig. 3), steuerbar ist. Bei anderen Ausführungsformen kann die Widerstandseinrichtung 17 beispielsweise auch ein Halbleiterbauelement, insbesondere einen Feldeffekttransistor oder dergleichen, aufweisen, dessen Drain-Source-Strecke unter Einwirkung des Steuersignals a1 beispielsweise zwischen einem hochohmigen Zustand ("kein Dämpfungswiderstand zugeschaltet") und einem Betriebszustand mit einem Widerstand der Drain-Source-Strecke in dem vorstehend genannten Bereich, beispielsweise von etwa 120 Ohm, steuerbar ist.

Weiter erfindungsgemäß ist vorgesehen, dass die vorgebbare erste Zeitdauer, für die der Widerstand R bezüglich der Busanschlüsse 12a, 12b aktivierbar ist, in Abhängigkeit wenigstens einer Betriebsgröße der Empfangseinheit 18 wählbar ist. Dadurch ist sichergestellt, dass der Widerstand R so lange aktivierbar ist, wie es für den Betrieb der Empfangseinheit 18 bzw. der Einrichtung 10 nützlich ist, aber z.B. nicht länger. Beispielsweise gibt die Empfangseinheit 18 demnach die vorgebbare erste Zeitdauer vor, für die der Widerstand R bezüglich der Busanschlüsse 12a, 12b aktiviert wird, was z.B. über das Steuersignal a1 erfolgt.

Optional kann die Sende-/Empfangseinrichtung 10 auch über eine Sendeeinheit 14 zum Ausgeben eines Bussendesignals an den ersten und zweiten Busanschluss 12a, 12b verfügen, beispielsweise zum Senden von Informationen über die Busleitung 160 an andere Teilnehmerstationen bzw. deren jeweilige Sende-/Empfangseinrichtungen (nicht gezeigt). Bevorzugt ist die Sendeeinheit 14 über ihre Anschlüsse 14a, 14b mit den Busanschlüssen 12a, 12b verbunden.

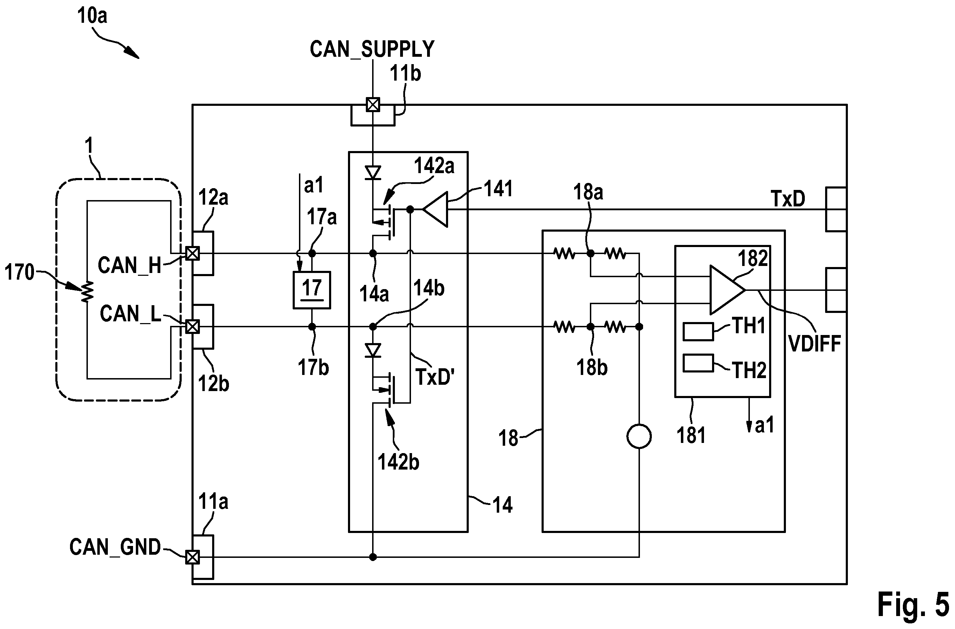

Figur 5 zeigt schematisch ein Blockdiagramm einer Sende-/Empfangseinrichtung 10a gemäß einer weiteren Ausführungsform, die vorliegend beispielsweise für den Betrieb an einem als CAN-FD-Bussystem ausgebildeten Bussystem 1 ausgebildet ist. Nachstehend werden i.w. nur die Unterschiede zu der Konfiguration 10 gemäß Fig. 3 beschrieben. Über einen Anschluss 11a ist die Sende-/Empfangseinrichtung 10a mit einem ersten Bezugspotential CAN_GND verbunden, bei dem es sich beispielsweise um eine Massepotential handelt. Über einen Anschluss 11b ist die Sende-/Empfangseinrichtung 10a mit einem zweiten Bezugspotential CAN_SUPPLY verbunden, bei dem es sich beispielsweise um ein einer Betriebsspannung entsprechendes Bezugspotential von z.B. +5 Volt handelt.

Die Sendeeinheit 14 weist einen Sendesignaltreiber 141 auf, der in Abhängigkeit eines ihm zugeführten Sendeeingangssignals TxD ein Ausgangssignal zur Ansteuerung der beiden Halbleiterschalter 142a, 142b erzeugt. Wie aus Figur 5 ersichtlich ist, kann bei entsprechender Ansteuerung des ersten Halbleiterschalters 142a durch das Sendeeingangssignal TxD (bzw. das verstärkte Sendeeingangssignal TxD') der erste Anschluss 14a der Sendeeinheit 14, über den die Sendeeinheit 14 mit dem ersten Busanschluss 12a verbunden ist, auf ein von dem zweiten Bezugspotential CAN_SUPPLY abhängendes elektrisches Potenzial gelegt werden. Analog hierzu kann bei entsprechender Ansteuerung des ersten Halbleiterschalters 142b durch das Sendeeingangssignal TxD der zweite Anschluss 14b der Sendeeinheit 14, über den die Sendeeinheit 14 mit dem zweiten Busanschluss 12b verbunden ist, auf ein von dem ersten Bezugspotential CAN_GND abhängendes elektrisches Potenzial gelegt werden. Dieser Betriebszustand der Sendeeinheit 14 wird daher auch als treibender Betriebszustand der Sendeeinheit 14 bezeichnet. Ein nicht treibender Betriebszustand der Sendeeinheit 14 ergibt sich dementsprechend dann, wenn die betreffenden Anschlüsse 14a, 14b bzw. 12a, 12b nicht durch die Halbleiterschalter 142a, 142b auf die vorstehend genannten Potenziale gelegt werden. Dieser Zustand kann auch als hochohmiger Zustand der Sendeeinheit 14 bezeichnet werden. Unerwünschte Busschwingungen können beispielsweise dann auftreten, wenn die Sendeeinheit 14 von dem treibenden Betriebszustand in den nicht treibenden Betriebszustand wechselt. Dann können die Busschwingungen vorteilhaft auch unter Anwendung des vorstehend beschriebenen Prinzips mittels der Widerstandseinrichtung 17 bedämpft werden.

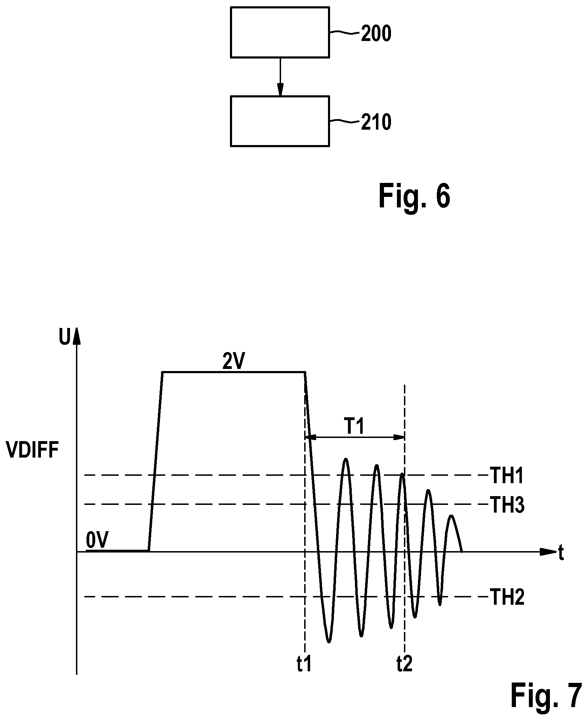

Auch bei der in Figur 5 beispielhaft beschriebenen Konfiguration kann demnach beispielsweise das Verfahren gemäß den Ausführungsformen ausgeführt werden, vgl. die Widerstandseinrichtung 17 und das Steuersignal a1. Figur 6 zeigt hierzu ein vereinfachtes Flussdiagram eines Verfahrens gemäß einer Ausführungsform. In Schritt 200 wählt die Sende-/Empfangseinrichtung 10a (Fig. 5) die vorgebbare erste Zeitdauer in Abhängigkeit wenigstens einer Betriebsgröße der Empfangseinheit 18, und in Schritt 210 verbindet die Sende-/Empfangseinrichtung 10a die Busanschlüsse 12a, 12b über den Widerstand R (Fig. 4) der Widerstandseinrichtung 17 für diese zuvor gewählte erste Zeitdauer miteinander.

Eine zumindest teilweise zeitlich überlappende Ausführung der Schritte 200, 210 ist bei weiteren Ausführungsformen auch denkbar. Beispielsweise kann zunächst ein Startzeitpunkt für die Aktivierung der Widerstandseinrichtung 17 gewählt werden und diese entsprechend aktiviert werden, und sodann kann in Abhängigkeit der wenigstens einen Betriebsgröße der Empfangseinheit 18 z.B. die vorgebbare Zeitdauer für die Aktivierung der Widerstandseinrichtung 17 ermittelt und nach deren Ablauf die Aktivierung beendet werden.

Bei weiteren bevorzugten Ausführungsformen weist die Empfangseinheit 18 (Fig. 5) einen Empfangskomparator 181 auf, der dazu ausgebildet ist, in Abhängigkeit des Busempfangssignals ein Busdifferenzsignal VDIFF zu bilden, wobei die wenigstens eine Betriebsgröße der Empfangseinheit 18 das Busdifferenzsignal VDIFF oder ein daraus abgeleitetes Signal ist. Dadurch kann die vorgebbare erste Zeitdauer besonders präzise ermittelt werden. Beispielsweise kann das Busdifferenzsignal VDIFF mittels eines Differenzverstärkers 182 aus den Bussignalen CAN_H, CAN_L gebildet werden. Das Busdifferenzsignal VDIFF kann auch als analoge Differenzspannung zwischen den CAN-Busleitungen CAN_H und CAN_L angesehen werden. Hierbei gilt VDIFF = CAN_H - CAN_L. Die Differenzspannung VDIFF beträgt für ein rezessives Bit z.B. 0V und für ein dominantes Bit typischerweise 2V.

Bei weiteren Ausführungsformen weist der Empfangskomparator 181 mehrere Empfangsschwellen TH1, TH2, .. , insbesondere für das Busdifferenzsignal VDIFF, auf, wodurch besonders effizient ermittelt werden kann, für wie lange der Widerstand R (Fig. 4) an die Busleitungen 12a, 12b zu schalten ist. Die Steuerung erfolgt wiederum mittels des Steuersignals a1, das bei der Konfiguration der Figur 5 durch den Empfangskomparator 181 bildbar und an die Widerstandseinrichtung 17 ausgebbar ist.

Bei weiteren Ausführungsformen liegt eine erste Empfangsschwelle TH1 bei etwa 0,7 Volt, wobei insbesondere eine zweite Empfangsschwelle TH2 bei einem Wert kleiner etwa 0 Volt liegt, und wobei insbesondere eine dritte Empfangsschwelle TH3 zwischen etwa 0 Volt und der ersten Empfangsschwelle liegt. Untersuchungen der Anmelderin zufolge ist hierdurch die erste Zeitdauer besonders einfach und präzise ermittelbar.

Figur 7 zeigt hierzu schematisch einen zeitlichen Verlauf des Busdifferenzsignals VDIFF gemäß einer Ausführungsform. Zu einem Zeitpunkt t1, also vorliegend bei der fallenden Flanke des Busdifferenzsignals VDIFF, setzen unerwünschte Schwingungen ein, die durch das Anschalten des Widerstands R (Fig. 4) für die vorgebbare erste Zeitdauer T1, also bis zum Zeitpunkt t2, gedämpft werden können.

Bei weiteren Ausführungsformen ist die Sende-/Empfangseinrichtung 10a (Fig. 5) dazu ausgebildet, den ersten und zweiten Busanschluss 12a, 12b für die vorgebbare erste Zeitdauer über den vorgebbaren elektrischen Widerstand R miteinander zu verbinden, wenn wenigstens eine der vorliegenden Bedingungen vorliegt: a) eine steigende Flanke eines Sendeeingangssignals TxD für die Sendeeinheit 14 der Sende-/Empfangseinrichtung 10a, b) ein Zustandsübergang der Sendeeinheit 14 von einem den ersten und zweiten Busanschluss treibenden Betriebszustand in einen den ersten und zweiten Busanschluss nicht treibenden Betriebszustand, c) eine fallende Flanke eines mittels der Empfangseinheit 18 aus dem Busempfangssignal BE abgeleiteten Differenzsignals VDIFF (Fig. 7). Der Startzeitpunkt t1 für die Aktivierung des Widerstands R ist also z.B. in Abhängigkeit wenigstens eines dieser Kriterien wählbar.

Demgegenüber ist die vorgebbare erste Zeitdauer T1 vorteilhaft in Abhängigkeit der wenigstens einen Betriebsgröße der Empfangseinheit 18 (Fig. 5) wählbar, vorliegend beispielsweise in Abhängigkeit des Zeitverlaufs VDIFF, z.B. in Bezug auf das Unter- und/oder Überschreiten wenigstens einer der genannten Empfangsschwellen TH1, TH2, TH3.

Bei manchen Ausführungsformen kann vorgesehen sein, dass das Differenzsignal VDIFF (Fig. 7) auf das Unterschreiten der negativen Empfangsschwelle TH2 hin überwacht wird, und daraufhin, ob die erste Empfangsschwelle TH1 nach einem erkannten (ein- oder mehrmaligen) Unterschreiten der negativen Empfangsschwelle TH2 innerhalb einer vorgebbaren Wartezeit, die vorzugsweise kleiner ist als eine Bitzeit der Datenübertragung auf dem Bussystem (insbesondere wesentlich kleiner, z.B. weniger als etwa 20 Prozent der Bitzeit der Datenübertragung auf dem Bussystem), überschritten oder nicht überschritten wird. Sofern z.B. die negative Empfangsschwelle TH2 durch das Differenzsignal VDIFF unterschritten worden ist, und sofern weiter innerhalb der vorgebbaren Wartezeit nach diesem Unterschreiten der negativen Empfangsschwelle TH2 die erste Empfangsschwelle TH1 nicht durch das Differenzsignal VDIFF überschritten worden ist, kann darauf geschlossen werden, dass zwar eine an sich unerwünschte Schwingung des Differenzsignals VDIFF vorlag (aufgrund des Unterschreitens der negativen Empfangsschwelle TH2), dass diese unerwünschte Schwingung aber inzwischen (innerhalb der Wartezeit) hinreichend stark abgeklungen ist (aufgrund des Nichtüberschreitens der ersten Empfangsschwelle TH1 innerhalb der Wartezeit). Dieser Zustand ist in Fig. 7 etwa zu dem Zeitpunkt t2 erreicht. Zwischen den Zeitpunkten t1 und t2 wird bei dem vorliegenden Beispiel die negative Empfangsschwelle TH2 insgesamt dreimal unterschritten, und die erste Empfangsschwelle TH1 nach der jeweiligen ersten und zweiten Unterschreitung der negativen Empfangsschwelle TH2 überschritten, nach der dritten Unterschreitung der negativen Empfangsschwelle TH2 wird jedoch anschließend die erste Empfangsschwelle TH1 allenfalls knapp erreicht, jedoch nicht mehr überschritten, vgl. den Zeitpunkt t2. Daher kann bei manchen Ausführungsformen ab dem Zeitpunkt t2 die Zuschaltung des Widerstands R (Fig. 4) deaktiviert werden. Bei weiteren Ausführungsformen kann auch vorgesehen sein, den Widerstand R ab dem Zeitpunkt t2 zuzüglich einer vorgebbaren Schutzzeit von z.B. etwa 5 Nanosekunden bis etwa 10 Nanosekunden zu deaktivieren, wobei die unerwünschte Schwingung dann besonders zuverlässig auf ein tolerierbares Maß abgeklungen ist.

Mit anderen Worten kann die Sende-/Empfangseinrichtung 10, 10a bei manchen Ausführungsformen dazu ausgebildet sein, das Differenzsignal VDIFF auf das Unterschreiten der negativen Empfangsschwelle TH2 hin zu überwachen, und daraufhin, ob die erste Empfangsschwelle TH1 nach einem erkannten (insbesondere ein- oder mehrmaligem) Unterschreiten der negativen Empfangsschwelle TH2 innerhalb einer vorgebbaren Wartezeit, die vorzugsweise kleiner (insbesondere wesentlich kleiner) ist als eine Bitzeit der Datenübertragung auf dem Bussystem, nicht überschritten wird. Der Zeitpunkt, zu dem diese Bedingungen erfüllt sind, kann als Ende der vorgebbaren ersten Zeitdauer T1 verwendet werden, also als Signal zur Deaktivierung des Widerstands R.

Bei bevorzugten Ausführungsformen ist die vorgebbare erste Zeitdauer T1 (Fig. 7) für die Aktivierung des Widerstands R (Fig. 4) typischerweise zwischen etwa 40 ns (Nanosekunden) und etwa 150 ns wählbar. Andere Werte sind bei weiteren Ausführungsformen ebenfalls denkbar.

Das Prinzip gemäß den Ausführungsformen ist nicht auf die Anwendung bei CAN- bzw. CAN-FD-Bussystemen beschränkt, sondern z.B. auch bei LVDS- oder LIN- Bussystemen verwendbar oder generell allen Bussystemen mit dominanten und rezessiven Buszuständen.

## Patentansprüche

1. Sende-/Empfangseinrichtung (10; 10a) für ein Bussystem (1; 2), wobei die Sende-/Empfangseinrichtung (10; 10a) einen ersten Busanschluss (12a) zur Verbindung mit einer ersten Signalleitung (1a; CAN_H) des Bussystems (1; 2), einen zweiten Busanschluss (12b) zur Verbindung mit einer zweiten Signalleitung (1b; CAN_L) des Bussystems (1; 2) und eine Empfangseinheit (18) zum Empfangen eines Busempfangssignals (BE) von dem ersten und zweiten Busanschluss (12a, 12b) aufweist, wobei die Sende-/Empfangseinrichtung (10; 10a) dazu ausgebildet ist, den ersten und zweiten Busanschluss (12a, 12b) für eine vorgebbare erste Zeitdauer (T1) über einen vorgebbaren elektrischen Widerstand (R) miteinander zu verbinden (210), wobei die vorgebbare erste Zeitdauer (T1) in Abhängigkeit wenigstens einer Betriebsgröße der Empfangseinheit (18) wählbar ist, wobei die Empfangseinheit (18) einen Empfangskomparator (181) aufweist, der dazu ausgebildet ist, in Abhängigkeit des Busempfangssignals (BE) ein Busdifferenzsignal (VDIFF) zu bilden, wobei die wenigstens eine Betriebsgröße der Empfangseinheit (18) das Busdifferenzsignal (VDIFF) oder ein daraus abgeleitetes Signal ist, wobei die Sende-/Empfangseinrichtung (10; 10a) dazu ausgebildet ist, den ersten und zweiten Busanschluss (12a, 12b) für die vorgebbare erste Zeitdauer über den vorgebbaren elektrischen Widerstand (R) miteinander zu verbinden, wenn wenigstens eine der vorliegenden Bedingungen vorliegt: a) eine steigende Flanke eines einer Sendeeinheit (14) der Sende-/Empfangseinrichtung (10; 10a) zuführbaren Sendeeingangssignals (TxD), b) ein Zustandsübergang der Sendeeinheit (14) von einem den ersten und zweiten Busanschluss (12a, 12b) treibenden Betriebszustand in einen den ersten und zweiten Busanschluss (12a, 12b) nicht treibenden Betriebszustand, c) eine fallende Flanke eines mittels der Empfangseinheit (18) aus dem Busempfangssignal (BE) abgeleiteten Differenzsignals (VDIFF), wobei der Empfangskomparator (181) mehrere Empfangsschwellen (TH1, TH2, TH3), insbesondere für das Busdifferenzsignal (VDIFF), aufweist, wobei eine erste Empfangsschwelle (TH1) bei etwa 0,7 Volt liegt, wobei eine zweite Empfangsschwelle (TH2) bei einem Wert kleiner etwa 0 Volt liegt, wobei die Sende-/Empfangseinrichtung (10; 10a) dazu ausgebildet ist, das Differenzsignal (VDIFF) auf das Unterschreiten der zweiten Empfangsschwelle (TH2) hin zu überwachen, und daraufhin, ob die erste Empfangsschwelle (TH1) nach einem erkannten, beispielsweise ein- oder mehrmaligen, Unterschreiten der zweiten Empfangsschwelle (TH2) innerhalb einer vorgebbaren Wartezeit, die kleiner ist als eine Bitzeit einer Datenübertragung auf dem Bussystem (1; 2), überschritten oder nicht überschritten wird, wobei die Sende-/Empfangseinrichtung (10; 10a) dazu ausgebildet ist, einen Zeitpunkt (t2), zu dem die erste Empfangsschwelle (TH1) nach dem erkannten Unterschreiten der zweiten Empfangsschwelle (TH2) nicht mehr überschritten wird, als das Ende der vorgebbaren ersten Zeitdauer (T1) zu verwenden.

2. Sende-/Empfangseinrichtung (10; 10a) nach Anspruch 1, wobei die vorgebbare Wartezeit kleiner als etwa 20 Prozent der Bitzeit der Datenübertragung auf dem Bussystem (1; 2) ist.

3. Sende-/Empfangseinrichtung (10; 10a) nach wenigstens einem der vorstehenden Ansprüche, wobei eine dritte Empfangsschwelle (TH3) zwischen etwa 0 Volt und der ersten Empfangsschwelle (TH1) liegt.

4. Sende-/Empfangseinrichtung (10; 10a) nach wenigstens einem der vorstehenden Ansprüche, wobei der vorgebbare elektrische Widerstand (R) einen Wert zwischen etwa 40 Ohm und etwa 200 Ohm aufweist, bevorzugt zwischen etwa 80 Ohm und etwa 160 Ohm, weiter bevorzugt zwischen 100 Ohm und etwa 140 Ohm, ganz besonders bevorzugt etwa 120 Ohm.

5. Teilnehmerstation (110, 120, 130, 140, 150) für ein Bussystem (1; 2) mit wenigstens einer Sende-/Empfangseinrichtung (10; 10a) nach wenigstens einem der vorstehenden Ansprüche.

6. Bussystem (1; 2) mit einer Busleitung (160), die wenigstens eine erste Signalleitung (1a; CAN_H) und wenigstens eine zweite Signalleitung (1b; CAN_L) aufweist, und mit mindestens zwei Teilnehmerstationen (110, 120, 130, 140, 150), wobei wenigstens eine der mindestens zwei Teilnehmerstationen (110, 120, 130, 140, 150) wenigstens eine Sende-/Empfangseinrichtung (10; 10a) nach wenigstens einem der Ansprüche 1 bis 4 aufweist.

7. Verfahren zum Betreiben einer Sende-/Empfangseinrichtung (10; 10a) für ein Bussystem (1; 2), wobei die Sende-/Empfangseinrichtung (10; 10a) einen ersten Busanschluss (12a) zur Verbindung mit einer ersten Signalleitung (1a; CAN_H) des Bussystems (1; 2), einen zweiten Busanschluss (12b) zur Verbindung mit einer zweiten Signalleitung (1b; CAN_L) des Bussystems (1; 2) und eine Empfangseinheit (18) zum Empfangen eines Busempfangssignals (BE) von dem ersten und zweiten Busanschluss (12a, 12b) aufweist, wobei die Sende-/Empfangseinrichtung (10; 10a) dazu ausgebildet ist, den ersten und zweiten Busanschluss (12a, 12b) für eine vorgebbare erste Zeitdauer über einen vorgebbaren elektrischen Widerstand (R) miteinander zu verbinden (210), wobei die Sende-/Empfangseinrichtung (10; 10a) die vorgebbare erste Zeitdauer in Abhängigkeit wenigstens einer Betriebsgröße der Empfangseinheit (18) wählt (200), wobei die Empfangseinheit (18) einen Empfangskomparator (181) aufweist, der dazu ausgebildet ist, in Abhängigkeit des Busempfangssignals (BE) ein Busdifferenzsignal (VDIFF) zu bilden, wobei die wenigstens eine Betriebsgröße der Empfangseinheit (18) das Busdifferenzsignal (VDIFF) oder ein daraus abgeleitetes Signal ist, wobei die Sende-/Empfangseinrichtung (10; 10a) den ersten und zweiten Busanschluss (12a, 12b) für die vorgebbare erste Zeitdauer über den vorgebbaren elektrischen Widerstand (R) miteinander verbindet, wenn wenigstens eine der vorliegenden Bedingungen vorliegt: a) eine steigende Flanke eines einer Sendeeinheit (14) der Sende-/Empfangseinrichtung (10; 10a) zuführbaren Sendeeingangssignals (TxD), b) ein Zustandsübergang der Sendeeinheit (14) von einem den ersten und zweiten Busanschluss (12a, 12b) treibenden Betriebszustand in einen den ersten und zweiten Busanschluss (12a, 12b) nicht treibenden Betriebszustand, c) eine fallende Flanke eines mittels der Empfangseinheit (18) aus dem Busempfangssignal (BE) abgeleiteten Differenzsignals (VDIFF), wobei der Empfangskomparator (181) mehrere Empfangsschwellen (TH1, TH2, TH3), insbesondere für das Busdifferenzsignal (VDIFF), aufweist, wobei eine erste Empfangsschwelle (TH1) bei etwa 0,7 Volt liegt, wobei eine zweite Empfangsschwelle (TH2) bei einem Wert kleiner etwa 0 Volt liegt, wobei die Sende-/Empfangseinrichtung (10; 10a) das Differenzsignal (VDIFF) auf das Unterschreiten der zweiten Empfangsschwelle (TH2) hin überwacht, und daraufhin, ob die erste Empfangsschwelle (TH1) nach einem erkannten, beispielsweise ein- oder mehrmaligen, Unterschreiten der zweiten Empfangsschwelle (TH2) innerhalb einer vorgebbaren Wartezeit, die kleiner ist als eine Bitzeit einer Datenübertragung auf dem Bussystem (1; 2), überschritten oder nicht überschritten wird, wobei die Sende-/Empfangseinrichtung (10; 10a) einen Zeitpunkt (t2), zu dem die erste Empfangsschwelle (TH1) nach dem erkannten Unterschreiten der zweiten Empfangsschwelle (TH2) nicht mehr überschritten wird, als das Ende der vorgebbaren ersten Zeitdauer (T1) verwendet.

8. Verfahren nach Anspruch 7, wobei die vorgebbare Wartezeit kleiner als etwa 20 Prozent der Bitzeit der Datenübertragung auf dem Bussystem (1; 2) ist.

## Claims

1. Transmission/reception device (10; 10a) for a bus system (1; 2), wherein the transmission/reception device (10; 10a) has a first bus connection (12a) for connecting to a first signal line (1a; CAN_H) of the bus system (1; 2), a second bus connection (12b) for connecting to a second signal line (1b; CAN_L) of the bus system (1; 2), and a reception unit (18) for receiving a bus reception signal (BE) from the first and second bus connections (12a, 12b), wherein the transmission/reception device (10; 10a) is designed to connect (210) the first and second bus connections (12a, 12b) to each other via a predefinable electrical resistance (R) for a predefinable first period of time (T1), wherein the predefinable first period of time (T1) is able to be selected in dependence on at least one operating variable of the reception unit (18), wherein the reception unit (18) has a reception comparator (181) which is designed to form a bus differential signal (VDIFF) in dependence on the bus reception signal (BE), wherein the at least one operating variable of the reception unit (18) is the bus differential signal (VDIFF) or a signal derived therefrom, wherein the transmission/reception device (10; 10a) is designed to connect the first and second bus connections (12a, 12b) to each other via the predefinable electrical resistance (R) for the predefinable first period of time if at least one of the present conditions is present: a) a rising edge of a transmission input signal (TxD) which is able to be supplied to a transmission unit (14) of the transmission/reception device (10; 10a), b) a state transition of the transmission unit (14) from an operating state driving the first and second bus connections (12a, 12b) to an operating state not driving the first and second bus connections (12a, 12b), c) a falling edge of a differential signal (VDIFF) derived from the bus reception signal (BE) by means of the reception unit (18), wherein the reception comparator (181) has a plurality of reception thresholds (TH1, TH2, TH3), in particular for the bus differential signal (VDIFF), wherein a first reception threshold (TH1) is at about 0.7 volts, wherein a second reception threshold (TH2) is at a value of less than about 0 volts, wherein the transmission/reception device (10; 10a) is designed to monitor whether the differential signal (VDIFF) falls below the second reception threshold (TH2), and then, after said differential signal has been detected to fall below the second reception threshold (TH2), for example one or more times, within a predefinable wait time, which is less than a bit time of a data transmission on the bus system (1; 2), whether or not the first reception threshold (TH1) is exceeded, wherein the transmission/reception device (10; 10a) is designed to use a time (t2), at which the first reception threshold (TH1) is no longer exceeded after said differential signal has been detected to fall below the second reception threshold (TH2), as the end of the predefinable first period of time (T1).

2. Transmission/reception device (10; 10a) according to Claim 1, wherein the predefinable wait time is less than about 20 per cent of the bit time of the data transmission on the bus system (1; 2).

3. Transmission/reception device (10; 10a) according to at least one of the preceding claims, wherein a third reception threshold (TH3) is between about 0 volts and the first reception threshold (TH1).

4. Transmission/reception device (10; 10a) according to at least one of the preceding claims, wherein the predefinable electrical resistance (R) has a value of between about 40 ohms and about 200 ohms, preferably of between about 80 ohms and about 160 ohms, more preferably of between 100 ohms and about 140 ohms, most preferably of about 120 ohms.

5. Subscriber station (110, 120, 130, 140, 150) for a bus system (1; 2) having at least one transmission/reception device (10; 10a) according to at least one of the preceding claims.

6. Bus system (1; 2) having a bus line (160) which has at least a first signal line (1a; CAN_H) and at least a second signal line (1b; CAN_L), and having at least two subscriber stations (110, 120, 130, 140, 150), wherein at least one of the at least two subscriber stations (110, 120, 130, 140, 150) has at least one transmission/reception device (10; 10a) according to at least one of Claims 1 to 4.

7. Method for operating a transmission/reception device (10; 10a) for a bus system (1; 2), wherein the transmission/reception device (10; 10a) has a first bus connection (12a) for connecting to a first signal line (1a; CAN_H) of the bus system (1; 2), a second bus connection (12b) for connecting to a second signal line (1b; CAN_L) of the bus system (1; 2), and a reception unit (18) for receiving a bus reception signal (BE) from the first and second bus connections (12a, 12b), wherein the transmission/reception device (10; 10a) is designed to connect (210) the first and second bus connections (12a, 12b) to each other via a predefinable electrical resistance (R) for a predefinable first period of time, wherein the transmission/reception device (10; 10a) selects (200) the predefinable first period of time in dependence on at least one operating variable of the reception unit (18), wherein the reception unit (18) has a reception comparator (181) which is designed to form a bus differential signal (VDIFF) in dependence on the bus reception signal (BE), wherein the at least one operating variable of the reception unit (18) is the bus differential signal (VDIFF) or a signal derived therefrom, wherein the transmission/reception device (10; 10a) connects the first and second bus connections (12a, 12b) to each other via the predefinable electrical resistance (R) for the predefinable first period of time if at least one of the present conditions is present: a) a rising edge of a transmission input signal (TxD) which is able to be supplied to a transmission unit (14) of the transmission/reception device (10; 10a), b) a state transition of the transmission unit (14) from an operating state driving the first and second bus connections (12a, 12b) to an operating state not driving the first and second bus connections (12a, 12b), c) a falling edge of a differential signal (VDIFF) derived from the bus reception signal (BE) by means of the reception unit (18), wherein the reception comparator (181) has a plurality of reception thresholds (TH1, TH2, TH3), in particular for the bus differential signal (VDIFF), wherein a first reception threshold (TH1) is at about 0.7 volts, wherein a second reception threshold (TH2) is at a value of less than about 0 volts, wherein the transmission/reception device (10; 10a) monitors whether the differential signal (VDIFF) falls below the second reception threshold (TH2), and then, after said differential signal has been detected to fall below the second reception threshold (TH2), for example one or more times, within a predefinable wait time, which is less than a bit time of a data transmission on the bus system (1; 2), whether or not the first reception threshold (TH1) is exceeded, wherein the transmission/reception device (10; 10a) uses a time (t2), at which the first reception threshold (TH1) is no longer exceeded after said differential signal has been detected to fall below the second reception threshold (TH2), as the end of the predefinable first period of time (T1).

8. Method according to Claim 7, wherein the predefinable wait time is less than about 20 per cent of the bit time of the data transmission on the bus system (1; 2).

## Revendications

1. Dispositif d'émission/réception (10 ; 10a) destiné à un système de bus (1 ; 2), le dispositif d'émission/réception (10 ; 10a) présentant une première connexion de bus (12a) pour la connexion à une première ligne de signaux (1a ; CAN_H) du système de bus (1 ; 2), une deuxième connexion de bus (12b) pour la connexion à une deuxième ligne de signaux (1b ; CAN_L) du système de bus (1 ; 2) et une unité de réception (18) destinée à recevoir un signal de réception de bus (BE) en provenance de la première et de la deuxième connexion de bus (12a, 12b), le dispositif d'émission/réception (10 ; 10a) étant conçu pour interconnecter (210) la première et la deuxième connexion de bus (12a, 12b) par l'intermédiaire d'une résistance électrique prédéfinissable (R) pendant une première durée prédéfinissable (T1), la première durée prédéfinissable (T1) pouvant être sélectionnée en fonction d'au moins une grandeur de fonctionnement de l'unité de réception (18), l'unité de réception (18) comportant un comparateur de réception (181) qui est conçu pour créer un signal de différence de bus (VDIFF) en fonction du signal de réception de bus (BE), ladite au moins une grandeur de fonctionnement de l'unité de réception (18) étant le signal de différence de bus (VDIFF) ou un signal dérivé de celui-ci, le dispositif d'émission/réception (10) ; 10a) étant conçu pour interconnecter les première et deuxième connexions de bus (12a, 12b) par l'intermédiaire de la résistance électrique prédéfinissable (R) pendant la première durée prédéfinissable si au moins l'une des conditions suivantes est satisfaite : a) un front montant d'un signal d'entrée d'émission (TxD) pouvant être fourni à une unité d'émission (14) du dispositif d'émission/réception (10 ; 10a), b) une transition d'état de l'unité d'émission (14) d'un état de fonctionnement commandant les première et deuxième connexions de bus (12a, 12b) à un état de fonctionnement ne commandant pas les première et deuxième connexions de bus (12a, 12b), c) un front descendant d'un signal de différence (VDIFF) dérivé du signal de réception de bus (BE) au moyen de l'unité de réception (18), le comparateur de réception (181) présentant plusieurs seuils de réception (TH1, TH2, TH3), en particulier pour le signal de différence de bus (VDIFF), un premier seuil de réception (TH1) étant d'environ 0,7 volt, un deuxième seuil de réception (TH2) étant à une valeur inférieure à environ 0 volt, le dispositif d'émission/réception (10 ; 10a) étant conçu pour surveiller le signal de différence (VDIFF) afin de détecter s'il passe en-dessous du deuxième seuil de réception (TH2), puis pour déterminer si le premier seuil de réception (TH1) est dépassé ou non après un passage détecté, par exemple une ou plusieurs fois, en-dessous du deuxième seuil de réception (TH2) au cours d'un temps d'attente prédéfinissable inférieur à un temps de bit d'une transmission de données sur le système de bus (1 ; 2), le dispositif d'émission/réception (10 ; 10a) étant conçu pour utiliser un instant (t2) auquel le premier seuil de réception (TH1) n'est plus dépassé après le passage détecté en-dessous du deuxième seuil de réception (TH2) en tant que fin de la première durée prédéfinissable (T1).

2. Dispositif d'émission/réception (10 ; 10a) selon la revendication 1, dans lequel le temps d'attente prédéfinissable est inférieur à environ 20 % du temps de bit de la transmission de données sur le système de bus (1 ; 2).

3. Dispositif d'émission/réception (10 ; 10a) selon au moins l'une des revendications précédentes, dans lequel un troisième seuil de réception (TH3) est compris entre approximativement 0 volt et le premier seuil de réception (TH1).

4. Dispositif d'émission/réception (10 ; 10a) selon au moins l'une des revendications précédentes, dans lequel la résistance électrique (R) prédéfinissable présente une valeur comprise entre environ 40 ohms et environ 200 ohms, de préférence entre environ 80 ohms et environ 160 ohms, de manière encore préférée entre 100 ohms et environ 140 ohms, et de manière particulièrement préférée d'environ 120 ohms.

5. Station d'abonné (110, 120, 130, 140, 150) destinée à un système de bus (1 ; 2) comprenant au moins un dispositif d'émission/réception (10 ; 10a) selon au moins l'une des revendications précédentes.

6. Système de bus (1 ; 2) comprenant une ligne de bus (160) qui présente au moins une première ligne de signaux (1a ; CAN_H) et au moins une deuxième ligne de signaux (1b ; CAN_L), et au moins deux stations d'abonnés (110, 120, 130, 140, 150), au moins l'une desdites au moins deux stations d'abonné (110, 120, 130, 140, 150) comportant au moins un dispositif d'émission/réception (10 ; 10a) selon au moins l'une des revendications 1 à 4.

7. Procédé pour faire fonctionner un dispositif d'émission/réception (10 ; 10a) destiné à un système de bus (1 ; 2), le dispositif d'émission/réception (10 ; 10a) présentant une première connexion de bus (12a) pour la connexion à une première ligne de signaux (1a ; CAN_H) du système de bus (1 ; 2), une deuxième connexion de bus (12b) pour la connexion à une deuxième ligne de signaux (1b ; CAN_L) du système de bus (1 ; 2) et une unité de réception (18) destinée à recevoir un signal de réception de bus (BE) en provenance de la première et de la deuxième connexion de bus (12a, 12b), le dispositif d'émission/réception (10 ; 10a) étant conçu pour interconnecter (210) la première et la deuxième connexion de bus (12a, 12b) par l'intermédiaire d'une résistance électrique prédéfinissable (R) pendant une première durée prédéfinissable, le dispositif d'émission/réception (10 ; 10a) sélectionnant (200) la première durée prédéfinissable en fonction d'au moins une grandeur de fonctionnement de l'unité de réception (18), l'unité de réception (18) comportant un comparateur de réception (181) qui est conçu pour créer un signal de différence de bus (VDIFF) en fonction du signal de réception de bus (BE), ladite au moins une grandeur de fonctionnement de l'unité de réception (18) étant le signal de différence de bus (VDIFF) ou un signal dérivé de celui-ci, le dispositif d'émission/réception (10) ; 10a) interconnectant les première et deuxième connexions de bus (12a, 12b) par l'intermédiaire de la résistance électrique prédéfinissable (R) pendant la première durée prédéfinissable si au moins l'une des conditions suivantes est satisfaite : a) un front montant d'un signal d'entrée d'émission (TxD) pouvant être fourni à une unité d'émission (14) du dispositif d'émission/réception (10 ; 10a), b) une transition d'état de l'unité d'émission (14) d'un état de fonctionnement commandant les première et deuxième connexions de bus (12a, 12b) à un état de fonctionnement ne commandant pas les première et deuxième connexions de bus (12a, 12b), c) un front descendant d'un signal de différence (VDIFF) dérivé du signal de réception de bus (BE) au moyen de l'unité de réception (18), le comparateur de réception (181) présentant plusieurs seuils de réception (TH1, TH2, TH3), en particulier pour le signal de différence de bus (VDIFF), un premier seuil de réception (TH1) étant d'environ 0,7 volts, un deuxième seuil de réception (TH2) étant à une valeur inférieure à environ 0 volt, le dispositif d'émission/réception (10 ; 10a) surveillant le signal de différence (VDIFF) afin de détecter s'il passe en-dessous du deuxième seuil de réception (TH2), puis pour déterminer si le premier seuil de réception (TH1) est dépassé ou non après un passage détecté, par exemple une ou plusieurs fois, en-dessous du deuxième seuil de réception (TH2) au cours d'un temps d'attente prédéfinissable inférieur à un temps de bit d'une transmission de données sur le système de bus (1 ; 2), le dispositif d'émission/réception (10 ; 10a) utilisant un instant (t2) auquel le premier seuil de réception (TH1) n'est plus dépassé après le passage détecté en-dessous du deuxième seuil de réception (TH2) en tant que fin de la première durée prédéfinissable (T1).

8. Procédé selon la revendication 7, dans lequel le temps d'attente prédéfinissable est inférieur à environ 20 % du temps de bit de la transmission de données sur le système de bus (1 ; 2).
